# FASCICULE DE BREVET EUROPEEN

(11) **EP 2 233 015 B1**
(45) Date de publication et mention de la délivrance du brevet: **01.12.2010**
(21) Numéro de dépôt: 09290004.2
(22) Date de dépôt: 06.01.2009
(51) Int. Cl.: A23K 1/02, A23K 1/00, A23L 1/30, A23L 1/308

(54) **Composition symbiotique et son procédé de fabrication**
Symbiotische Zusammensetzung und ihr Herstellungsverfahren
Symbiotic composition and process for the manufacture thereof

(43) Date de publication de la demande: 29.09.2010
(73) Titulaire: Rosebud AG, 6300 Zug (CH)
(72) Inventeur: Allemand, Brigitte, 81500 Marzens (FR); Pousset, Florence, 33320 Eysines (FR)
(74) Mandataire: Hirsch & Associés

(56) Documents cités:
- WO-A-02/062363
- WO-A-2005/032591
- WO-A-2007/125558
- WO-A-2007/126990
- US-A- 3 147 121
- US-A1- 2007 160 589

## Description

### DOMAINE DE L'INVENTION

La présente invention concerne une composition symbiotique (association de prébiotique et probiotique) ainsi que son procédé de fabrication.

### ARRIERE-PLAN TECHNIQUE

Depuis de nombreuses années, on connaît l'effet bénéfique sur la santé humaine ou animale de l'ingestion de certains micro-organismes vivants. Selon l'Organisation des Nations Unies de l'Alimentation et de l'Agriculture, ces micro-organismes vivants, désignés « probiotiques », confèrent un bénéfice santé à l'hôte lorsqu'ils sont administrés en une quantité adéquate.

Ces probiotiques (comme entre autres, les bifidobactéries) sont utilisés pour la fabrication de compositions diététiques ou pharmaceutiques. Certaines compositions comprennent des probiotiques micro-encapsulés et des suppléments alimentaires (vitamine C et E, protéinate de zinc, protéinate de manganèse, sulfate ferreux, protéinate de cuivre, iodure de calcium et sélénite de sodium) (document WO 2007/126990). Dans certaines compositions, les suppléments alimentaires prolongent la durée de vie des probiotiques.

Il est généralement reconnu que l'ingestion de probiotiques permet de maintenir ou restaurer l'équilibre de la flore intestinale chez l'homme et l'animal en modifiant sa composition et/ou son activité, via la stimulation de la prolifération des bactéries commensales bénéfiques et l'inhibition de la prolifération des bactéries pathogènes ; d'exercer une action trophique sur les cellules épithéliales de l'intestin ; d'améliorer la tolérance au lactose par libération de β-galactosidase ; de stimuler l'activité immunitaire locale, dans les tissus lymphoïdes associés à l'intestin (GALT) et systémique (stimulation de l'activité des macrophages, présentation de l'antigène, production d'immunoglobulines et de cytokines) ; d'exercer une activité anti-tumorale, en diminuant l'activité des enzymes de la flore intestinale (beta glucuronidases, beta glucosidases, azoréductases et nitroréductases, oxydoréductase) responsables de la transformation de substances pro-carcinogènes en carcinogènes, et particulièrement, de synthétiser *in situ* des vitamines et des acides aminés, et d'accroître leur absorption ainsi que celle de certains minéraux.

Les probiotiques préviennent un état de maladie dont les infections gastro-intestinales, les carences nutritionnelles et confèrent des bénéfices à la santé et au bien-être de l'hôte comme une amélioration du transit gastro-intestinal (meilleure motilité, diminution de la durée du transit, réduction des interactions entre carcinogènes fécaux et épithélium intestinal) et une amélioration du système immunitaire. A titre d'exemple, la plupart des bifidobactéries produisent en faible quantité des vitamines (B1, B3, B6, B9, B12) et des enzymes digestives indispensables à la santé et au bien-être de l'hôte ; et présentent des effets bénéfiques prophylactiques et thérapeutiques.

On connaît également l'effet bénéfique sur la santé humaine et animale de l'ingestion de prébiotiques, substances alimentaires ou diététiques généralement composées de polysaccharides et oligosaccharides essentiellement non amidonnés et non digestibles ou d'alcools de sucres non dégradés et non absorbés dans la partie supérieure du tractus digestif, et qui stimulent de façon sélective, dans l'intestin, la croissance et l'activité d'un ou d'un nombre limité de micro-organismes vivants et bénéfiques pour l'hôte (Gibson et al., J. Nutr., 1995, 125(6):1401-12, *Dietary modulation of the human colonic microbiota: introducing the concept of Prebiotics*). Les prébiotiques sont caractérisés par une valeur calorique faible de l'ordre de 1,5 kcal/g.

Les prébiotiques favorisent la croissance et le métabolisme des bactéries commensales bénéfiques du colon (essentiellement des lactobacilles et bifidobactéries), au détriment des bactéries pathogènes, ce qui entraîne un rééquilibrage de la composition de la flore intestinale. Les prébiotiques ont des propriétés immunomodulatrices locales, au niveau de la muqueuse intestinale : ils augmentent la production des immunoglobulines, des cytokines et des lymphocytes T. Ils modifient l'épaisseur et la composition de la muqueuse épithéliale du colon en augmentant le nombre de cellules épithéliales calciformes et en favorisant l'apparition de mucines plus acides caractéristiques d'une muqueuse intestinale stabilisée. Ainsi, une flore intestinale stabilisée contribue à la prévention des infections, des processus oxydatifs et surtout, améliore la fonction d'absorption de l'intestin. En outre, les prébiotiques participent indirectement, via la flore commensale, à l'absorption de minéraux comme le fer, le calcium, le magnésium et le zinc, reconnus pour leurs effets bénéfiques sur la santé. Des études montrent que la présence de prébiotiques, tels que les oligofructoses, augmente de façon significative l'absorption du magnésium et l'accrétion du phosphore dans le fémur ; de plus, l'ingestion combinée d'oligofructoses et de calcium, à un taux élevé, est considérée comme le régime alimentaire le plus favorable, en particulier pour la solidité des os et la diminution du risque de fractures. Il est connu depuis peu que les prébiotiques ont un site d'action plus large que le système gastro-intestinal, à savoir la peau, le système urinaire, le système respiratoire et le système génital féminin.

Les prébiotiques (en particulier les fructo-oligosaccharides alimentaires) n'ont pas un effet intrinsèque, par eux-mêmes, sur l'épithélium intestinal mais un effet via la flore intestinale (bactéries commensales) et les probiotiques ; les prébiotiques améliorent la viabilité et favorisent la prolifération et la métabolisme *in vivo* des probiotiques.

Des associations de probiotiques et de prébiotiques, communément appelée symbiotiques, sont utilisées dans l'alimentation ou la thérapie, humaine ou animale.

Dans ces compositions symbiotiques, les prébiotiques représentent une source d'énergie sélective des probiotiques. Un symbiotique exerce à la fois une activité prébiotique et probiotique. Les symbiotiques stimulent le système immunitaire local associé à l'épithélium intestinal, et le système immunitaire systémique en particulier en diminuant la production de cytokines inflammatoires (IL-1, TNF-α) ce qui diminue le risque d'infections. Les symbiotiques augmentent le nombre et la diversité des bactéries fécales chez l'homme, en particulier les lactobacilles et bifidobactéries, augmentent la fréquence des selles chez les patients avec un syndrome du colon irritable et souffrant de constipation, et diminuent les douleurs abdominales et les ballonnements. Les symbiotiques ont un effet protecteur contre la formation des tumeurs en modifiant le métabolisme des bactéries intestinales, ils induisent une diminution de la concentration en β-glucuronidase et ammoniaque du contenu intestinal, diminue l'incidence de la formation de cryptes aberrantes considérées comme prédictive d'une tumeur.

Cependant, l'effet d'un symbiotique est plus important que celui d'un probiotique ou d'un prébiotique seul. Leurs effets combinés peuvent être additifs ou synergiques et contribuent à une meilleure efficacité de l'activité fonctionnelle intestinale telle qu'une amélioration du processus d'absorption des nutriments, vitamines, minéraux, amino-acides et oligo-éléments. Le document WO 2007/125558 décrit par exemple de telles compositions symbiotiques.

Toutefois, les compositions symbiotiques proposées dans l'état de la technique ne sont pas complètement satisfaisantes :
(i) Sur le plan nutritionnel, les symbiotiques connus ne comprennent que des prébiotiques non digestibles (de par leur composition quasi-exclusive en fibres). Les symbiotiques ont principalement une activité nutritionnelle directe sur la composition et le métabolisme de la flore intestinale ; ils ont une activité nutritionnelle limitée sur l'hôte. Certaines compositions symbiotiques sont décrites comme transporteur (« carrier ») de substances bioactives naturelles ou non et ajoutées à la composition, pour garantir la prolifération des probiotiques lors du stockage et après ingestion (documents US 2007/0166433 et EP 938850).
(ii) Les symbiotiques connus ne sont pas, en raison de leur procédé d'obtention, des formulations homogènes, et de ce fait, les prébiotiques sont généralement administrés avec les probiotiques, simultanément par mélange extemporané ou en même temps (par des voies semblables ou différentes) ou séquentiellement (par des voies semblables ou différentes : documents WO 2007/126990 et WO 2007/785970).

Il existe donc un besoin de fournir une composition symbiotique homogène présentant de meilleures qualités nutritionnelles pour les probiotiques et l'hôte, et un besoin d'améliorer les effets bénéfiques de la composition symbiotique sur la flore intestinale et la santé globale de l'hôte. Il existe encore un besoin d'améliorer la formulation des symbiotiques pour une utilisation variée et étendue, tout en garantissant la protection des microorganismes vis-à-vis du milieu extérieur, avant leur arrivée au site d'action intestinal.

### RESUME DE L'INVENTION

L'invention concerne en premier lieu une composition comprenant :
- de la mélasse séchée ; et
- des micro-organismes vivants, déshydratés et encapsulés.

Selon un mode de réalisation, la composition comprend en outre des fibres de polyoside.

Selon un mode de réalisation, les fibres de polyoside sont des fibres de dextrine ou de maltodextrine.

Selon un mode de réalisation, la composition comprend une proportion massique totale d'eau inférieure ou égale à 6 %, de préférence inférieure ou égale à 5 %, de manière plus particulièrement préférée inférieure à 4 %.

Selon un mode de réalisation, la composition comprend en proportions massiques (de préférence consiste en) :
- de 10 à 50 % de mélasse séchée, de préférence de 15 à 45 %, de manière plus particulièrement préférée de 20 à 40 % ;
- de 15 à 70 % de fibres de polyoside, de préférence de 25 à 65 %, de manière plus particulièrement préférée de 35 à 60 % ; et
- de 4 à 50 % de micro-organismes vivants, déshydratés et encapsulés, de préférence de 10 à 40 %, de manière plus particulièrement préférée de 20 à 30 %.

Selon un mode de réalisation, la mélasse est choisie parmi les mélasses de betterave, de canne, de fruits, de céréales et leurs mélanges, de préférence parmi les mélasses de betterave, de canne et leurs mélanges et de manière plus particulièrement préférée de canne.

Selon un mode de réalisation, les micro-organismes sont des micro-organismes probiotiques choisis parmi les bactéries ou levures des genres *Bifidobacterium, Lactobacillus, Lactococcus, Streptococcus, Pediococcus, Enterococcus, Propionibacterium, Saccharomyces, Kluyveromyces* et leurs mélanges, et de préférence parmi les espèces *Bifidobacterium longum, Lactobacillus casei, Lactobacillus rhamnosus, Lactobacillus helveticus* et *Saccharomyces torula.*

Selon un mode de réalisation, la composition comprend une quantité de micro-organismes vivants d'au moins 10⁵, de préférence au moins 10⁷, idéalement au moins 5x 10⁷ cfu/g.

L'invention concerne également un produit alimentaire ou diététique comprenant la composition telle que décrite ci-dessus.

L'invention concerne également un médicament comprenant la composition telle que décrite ci-dessus, sous forme de comprimés, gélules, poudre ou granules.

L'invention concerne également un procédé de fabrication d'une composition, comprenant le mélange de mélasse avec des micro-organismes vivants, déshydratés et encapsulés, ainsi qu'une étape de séchage.

Selon un mode de réalisation, le procédé susmentionné comprend successivement :
- le mélange de la mélasse, de fibres de polyoside, et éventuellement d'eau de sorte à obtenir un pré-mélange ;
- l'ajout des micro-organismes vivants, déshydratés et encapsulés au pré-mélange de sorte à obtenir une composition intermédiaire ; et
- le séchage de la composition intermédiaire.

Selon un mode de réalisation, le séchage de la composition intermédiaire est effectué par atomisation.

Selon un mode de réalisation le taux de matière sèche du pré-mélange est compris entre 30 et 60 %, de préférence entre 40 et 50 % en masse.

Selon un mode de réalisation du procédé, la composition est telle que décrite ci-dessus.

La présente invention permet de surmonter les inconvénients de l'état de la technique. Elle fournit plus particulièrement une composition symbiotique homogène présentant de meilleures qualités nutritionnelles et galéniques.

Ceci est accompli grâce à l'utilisation d'une mélasse, en tant que prébiotique.

La mélasse est un ingrédient extrêmement riche en éléments d'intérêt nutritionnel, tels que sucres, fibres non digestibles, minéraux, oligo-éléments, vitamines et acides aminés. La mélasse étant sous forme liquide et de forte densité, il ne serait pas possible de fabriquer une composition comprenant directement les probiotiques en mélange avec la mélasse, car les micro-organismes stabilisés ne survivraient pas, du fait de la pression osmotique.

C'est pourquoi l'invention prévoit d'utiliser les probiotiques exclusivement sous forme déshydratée et encapsulée afin de les protéger, et la mélasse sous forme séchée afin d'éviter une détérioration des capsules.

Selon certains modes de réalisation particuliers, l'invention présente également une, ou de préférence plusieurs, des caractéristiques avantageuses énumérées ci-dessous.
- La mélasse remplit à la fois une fonction de prébiotique en servant de support de croissance aux probiotiques et en stimulant leur activité, une fois la composition ingérée, et directement une fonction de supplément diététique pour l'homme ou l'animal ou pharmaceutique pour l'homme ou l'animal (applications vétérinaires).
- La mélasse fournit directement une grande variété d'éléments d'intérêt nutritionnel, tels que sucres, fibres, minéraux, vitamines, oligo-éléments, et acides aminés, sans qu'il soit nécessaire d'ajouter séparément et individuellement ces éléments à la composition. Ainsi, l'invention est économique.
- La mélasse transformée selon le procédé de l'invention, permet une grande variété de mise en oeuvre des mélanges symbiotiques, ouvrant à des utilisations et des modes d'administration divers, pour l'homme et l'animal.

- La mélasse ainsi transformée préserve le probiotique encapsulé de l'altération éventuelle des divers supports dans lesquels il peut être formulé (par exemple du lait en poudre).
- Les substances actives sont parfaitement homogénéisées grâce au séchage et au mélange concomitants.

Le symbiotique de la présente invention résout les problèmes susmentionnés. En effet, le symbiotique de la présente invention comprend un probiotique encapsulé connu pour ses effets sur la santé de l'hôte, et un nouveau prébiotique, qui est à la fois une source d'énergie pour le probiotique associé et une source d'énergie directe pour l'hôte car il contient simultanément des vitamines, des minéraux, des oligo-éléments et des amino-acides essentiels et non-essentiels, naturellement présents dans le prébiotique et dont l'absorption est facilitée par la combinaison probiotique-prébiotique. Vitamines, minéraux, oligo-éléments et amino-acides essentiels et non-essentiels sont des substances biologiquement actives, indispensables au fonctionnement physiologique de l'organisme sain ou pathologique, et qui favorisent l'état général de santé ou la santé globale de l'homme et de l'animal. Le symbiotique de la présente invention représente par sa composition en vitamines, minéraux, oligo-éléments et amino-acides essentiels et non-essentiels, ainsi que par son faible index glycémique, un régime alimentaire fortement favorable à la santé de l'hôte.

Le symbiotique de la présente invention présente une action double, directe sur la flore intestinale et directe sur l'hôte. De plus, le symbiotique de la présente invention répond aux exigences formulées par l'Agence Française de Sécurité Sanitaire des Produits de Santé, dans le cahier des charges pour le choix d'un couple nutriment-aliment vecteur, condition 6, qui énonce la priorité aux aliments contenant naturellement le nutriment.

Le symbiotique de la présente invention présente du fait de son procédé de fabrication une bonne homogénéité et permet l'administration immédiate et simultanée des deux composants du symbiotique.

La préparation du symbiotique de la présente invention comprend un mélange homogène des ingrédients réalisé à l'aide d'un mélangeur, suivi d'une déshydratation par atomisation.

Le symbiotique de la présente invention est une poudre qui présente des possibilités galéniques diverses et variées.

La composition selon l'invention est utile pour les indications non-thérapeutiques et thérapeutiques suivantes, qu'elles soient préventives, curatives ou palliatives:
- En ce qui concerne la sphère digestive : amélioration de la constipation, diminution des processus inflammatoires de la partie inférieure du tractus intestinal, rééquilibrage bénéfique de la flore intestinale des personnes fragiles (enfants, personnes âgées, convalescents, malades) et de toute personne souffrant de carence.
- En ce qui concerne les performances sportives : stabilisation de la glycémie et augmentation de la glycogénolyse, augmentation des capacités de stockage des sucres par le muscle ; amélioration de l'assimilation des nutriments; diminution de la fréquence des crampes (due à la concentration en magnésium) ; amélioration de la récupération.
- En ce qui concerne la production des lipides diminution des concentrations du cholestérol total et LDL, augmentation du HDL et amélioration du rapport LDL/HDL, aide à lutter contre l'obésité et le risque athéromateux, amélioration des signes cliniques liés au syndrome métabolique.
- En ce qui concerne l'immunité : action stimulante de l'immunité avec diminution de la fréquence et de la sévérité des épisodes infectieux.
- En ce qui concerne les fonctions cérébrales : amélioration des fonctions mentales (jugement, mémoire, organisation mentale, orientation dans l'espace et le temps), et des fonctions perceptives (représentation du corps, représentation spatiale).
- En ce qui concerne le bien-être : diminution des sensations de fatigue, amélioration de l'humeur ; diminution des effets de l'adrénaline produite par le stress.
- En ce qui concerne les os et les cartilages : amélioration de la consolidation de l'os après fracture, raideur des articulations, amélioration de l'arthrose et de l'ostéoporose.
- En ce qui concerne le vieillissement: action anti-âge par le maintien de l'équilibre acido-basique (due à la concentration en potassium); action anti-radicalaire (due à la concentration en manganèse).

### DESCRIPTION DE MODES DE REALISATION DE L'INVENTION

L'invention est maintenant décrite plus en détail et de façon non limitative dans la description qui suit.

### Ingrédients

La composition selon l'invention comprend de la mélasse séchée, de préférence des fibres de polyoside, ainsi que des micro-organismes vivants, déshydratés et encapsulés.

Par « mélasse » on entend le co-produit constitué par le résidu sirupeux insusceptible de cristallisation qui est recueilli lors de la fabrication de produits sucrés (de préférence de sucres simples) à partir de végétaux.

Les végétaux en question peuvent être de préférence des betteraves ou de la canne (dans le cadre de la production de saccharose) mais également éventuellement des céréales (dans le cadre de la production de glucose) ou des fruits, notamment agrumes (dans le cadre de la production de pulpe concentrée).

Typiquement, lors de la fabrication de sucre, on extrait un jus qui est purifié par la chaux. Le jus épuré est concentré sous pression, puis sous vide et cristallisé. Au fur et à mesure que les cristaux de sucre se forment, les résidus se concentrent dans la fraction liquide. La cristallisation peut par exemple être accomplie en trois jets, les cristaux de sucre étant à chaque fois enlevés avant de concentrer à nouveau le jus. Après la dernière cristallisation, le jus résiduel ne cristallise plus, même si on le concentre à nouveau. C'est ce jus qui est connu dans le domaine sous le nom de mélasse (ou mélasse brute).

Cette mélasse contient généralement de 65 à 80 % de matières sèches, de préférence de 70 à 76 % ; elle contient généralement de 10 à 20 % (en matière sèche) de matières minérales, de préférence de 12 à 15 % ; elle contient généralement de 2 à 20 % (en matière sèche) de matières azotées, de préférence de 5 à 16 % ; et elle contient généralement de 50 à 75 % (en matière sèche) de sucres, de préférence de 60 à 70 %.

Plus précisément, la mélasse comprend généralement les composés suivants (les gammes de concentration étant fournies indépendamment les unes des autres) :
- de 30 à 66 %, de préférence de 35 à 40 % (en matière sèche) de saccharose ;
- de 1 à 10 %, de préférence de 2,5 à 5 % (en matière sèche) de glucose ;
- de 1 à 5 %, de préférence de 2,5 à 5 % (en matière sèche) de fructose ;
- de 0,2 à 2 %, de préférence de 0,5 à 1 % (en matière sèche) de rhamnose ;
- de 0,2 à 1 %, de préférence de 0,4 à 0,7 % (en matière sèche) de cuivre ;
- de 0,2 à 1 %, de préférence de 0,3 à 0,9 % (en matière sèche) de calcium ;
- de 1 à 2 %, de préférence de 1,4 à 1,7 % (en matière sèche) de fer ;
- de 0,2 à 0,7 %, de préférence de 0,3 à 0,6 % (en matière sèche) de manganèse ;
- de 3,5 à 8,5 %, de préférence de 4 à 5 % (en matière sèche) de potassium ;
- de 0,2 à 1 %, de préférence de 0,2 à 0,5 % (en matière sèche) de magnésium ;
- de 0,2 à 1 %, de préférence de 0,2 à 0,5 % (en matière sèche) de soufre ;
- de 0,1 à 0,5 %, de préférence de 0,1 à 0,2 % (en matière sèche) de pyridoxine (vitamine B6) ;
- de 7 à 8 %, de préférence de 7 à 7,5 % (en matière sèche) de choline ;
- de 0, 1 à 1 %, de préférence de 0,5 à 0,7 % (en matière sèche) de niacine (vitamine B3) ;
- de 0,1 à 0 ,3 %, de préférence de 0,1 à 0,2 % (en matière sèche) de riboflavine (vitamine B2) ;
- de 0 à 1 %, de préférence de 0,7 à 0,9 % (en matière sèche) de thiamine (vitamine B1) ;
- de 1 à 5 %, de préférence de 1,3 à 4 % (en matière sèche) d'acide aspartique ;
- de 0,1 à 1 %, de préférence de 0,3 à 0,5 % (en matière sèche) d'arginine ;
- de 2 à 5 %, de préférence de 2,2 à 4,5 % (en matière sèche) d'acide glutamique ;
- de 0,1 à 0,5 %, de préférence de 0,11 à 0,21 % (en matière sèche) d'histidine.

La composition exacte de la mélasse dépend toutefois du procédé de production ainsi que de la matière première végétale.

Les mélasses de betteraves et de cannes à sucre sont connues en tant qu'appétant et liant pour les constituants de l'alimentation animale ; ou en tant que milieu de culture pour les micro-organismes (essentiellement les levures de boulangerie) ; ou en tant qu'édulcorant dans l'alimentation humaine en particulier la confiserie.

Dans le cadre de la présente invention, la mélasse est utilisée en tant que prébiotique.

Dans le cadre de l'invention, le terme de « mélasse séchée » désigne un produit présentant la même composition que la mélasse conventionnelle décrite ci-dessus, à l'exception de la teneur en eau, qui est inférieure à la teneur en eau de la mélasse conventionnelle décrite ci-dessus. Ainsi, la mélasse séchée présente de préférence une teneur en matières sèches supérieure ou égale à 80 %, plus particulièrement supérieure ou égale à 85 %, supérieure ou égale à 90 % voire idéalement supérieure ou égale à 94 %, 95 % ou 96 %.

En d'autres termes, la mélasse séchée utilisée dans le cadre de l'invention peut être qualifiée de « mélasse séchée à l'état brut », dans la mesure où la seule différence de composition entre la mélasse séchée selon l'invention et la mélasse conventionnelle réside dans la teneur en eau, ladite mélasse séchée n'ayant subi aucune transformation chimique, ni aucun ajout ou retrait d'ingrédient par rapport à la mélasse conventionnelle.

La mélasse séchée utilisée dans la présente invention est de préférence sous forme de poudre.

La mélasse séchée utilisée dans la présente invention est de préférence conforme à la réglementation française et / ou à la réglementation européenne relatives à l'alimentation. Ceci est effectué en prenant les mesures nécessaires lors de la culture des végétaux à l'origine de la mélasse, et lors de leur transport et traitement industriel. Notamment, la mélasse séchée est substantiellement exempte de pesticides et autres résidus au sens du règlement communautaire n°178/2006 ensemble le règlement communautaire n°396/2005.

Les fibres de polyoside utilisées dans le cadre de la présente invention sont des fibres solubles dans l'eau, de grade alimentaire. Ces fibres remplissent une fonction d'agent de charge dans la présente composition.

Il s'agit de polymères constitués de plusieurs oses liés entre eux par des liaisons O-osidiques. Les oses peuvent être des trioses, tétroses, pentoses, hexoses ou heptoses, de préférence des hexoses. Parmi les hexoses, le glucose est préféré.

Ainsi, les fibres de polyoside dont l'utilisation est préférée dans le cadre de l'invention sont les polymères de glucose, notamment l'amidon, la cellulose et la dextrine, ainsi que les hydrolysats d'amidon tels que la maltodextrine. Les fibres de dextrine sont préférées. Les produits commercialisés par Roquette sous la marque Nutriose® constituent des fibres de dextrine particulièrement appropriées.

Des mélanges des fibres susmentionnées sont aussi possibles.

Les micro-organismes utilisés dans le cadre de l'invention peuvent être tous micro-organismes et en particulier tous micro-organismes connus pour leur action bénéfique sur la santé humaine ou animale (micro-organismes probiotiques). Il peut s'agir de bactéries ou de levures.

Parmi les genres de micro-organismes préférés, on peut notamment citer les genres *Bifidobacterium, Lactobacillus, Lactococcus, Streptococcus, Pediococcus, Enterococcus, Propionibacterium, Saccharomyces* et *Kluyveromyces.*

Des exemples d'espèces de micro-organismes préférés sont *Lactobacillus acidophilus, Lactobacillus plantarum, Lactobacillus casei, Lactobacillus rhamnosus, Lactobacillus zeae, Lactobacillus salivarius, Lactobacillus lactis, Lactobacillus helveticus, Lactobacillus reuteri, Lactobacillus amylovorus, Lactobacillus crispatus, Lactobacillus curvatus, Lactobacillus delbrueckii* (notamment *Lactobacillus delbrueckii ssp. delbrueckii* et *Lactobacillus delbrueckii ssp. bulgaricus*), *Lactobacillus gasseri, Lactobacillus johnsonii, Lactobacillus fermentum, Lactobacillus brevis, Streptococcus thermophilus, Streptococcus* salivarius, *Lactococcus lactis* (notamment *Lactococcus lactis ssp. lactis* et *Lactococcus lactis ssp. cremoris*), *Leuconostoc sp., Enterococcus faecium, Pediococcus pentosaceus, Pediococcus acidilactici, Bifidobacterium longum, Bifidobacterium breve, Bifidobacterium bifidum, Bifidobacterium infantis, Bifidobacterium lactis, Bifidobacterium helveticus, Saccharomyces cerevisiae, Saccharomyces boulardii* ainsi que les mélanges de ceux-ci.

L'espèce *Bifidobacterium longum* est particulièrement préférée.

Les micro-organismes présents dans la composition selon l'invention sont vivants, déshydratés et encapsulés. Le terme « vivants » signifie qu'au moins une partie des micro-organismes sont vivants (c'est-à-dire susceptibles de croître dans un milieu de culture approprié), étant entendu qu'une certaine fraction des micro-organismes est nécessairement présente sous forme inactive.

De préférence, la composition contient des micro-organismes en une quantité d'au moins 10⁵, plus particulièrement au moins 10⁷, idéalement au moins 5×10⁷ CFU par gramme de composition.

La forme encapsulée garantit une meilleure préservation des micro-organismes, en les protégeant de l'environnement et en présentant à la fois une bonne stabilité chimique et une bonne résistance aux contraintes mécaniques.

De préférence, ces micro-organismes vivants sont sous forme d'agglomérats, déshydratés et enrobés d'une couche hydrophobe. La couche hydrophobe peut être préférentiellement une couche d'acide gras, de cire ou d'un mélange de ceux-ci. Les particules enrobées présentent de préférence un diamètre moyen compris entre 100 µm et 5 mm, de manière plus particulièrement préférée entre 300 µm et 2 mm.

Il est renvoyé au document WO 01/68808 qui décrit en détail le procédé d'obtention de tels micro-organismes vivants, déshydratés et encapsulés. Ces produits sont également disponibles dans le commerce, notamment par Lallemand (institut Rosell) sous la marque Probiocap^{™}.

De préférence, la composition selon l'invention est sous forme pulvérulente. Sa teneur (massique) en eau est de préférence inférieure ou égale à 6 %, plus particulièrement inférieure ou égale à 5 %, de manière plus particulièrement préférée inférieure ou égale à 4 %.

La composition selon l'invention peut également contenir divers additifs tels que un ou plusieurs arômes, excipients, colorants et agents de formulation ainsi que toute substance d'origine naturelle organique, minérale et végétale autre que vitamines, minéraux, oligoéléments et acides aminés, en une concentration massique de préférence comprise entre 0,01 à 50 %, plus particulièrement entre 0,1 et 10 %.

### Procédé

La composition selon l'invention est susceptible d'être obtenue au moyen d'un procédé de fabrication qui comprend le mélange de mélasse telle que décrite ci-dessus, de micro-organismes vivants, déshydratés et encapsulés tels que décrits ci-dessus, et de préférence de fibres de polyoside.

De préférence, on commence par mélanger la mélasse et les fibres de polyoside de sorte à obtenir un pré-mélange. Tout type de mélangeur conventionnel peut être utilisé. Lors de la fabrication de ce pré-mélange, les fibres de polyoside sont imprégnées avec la mélasse. A ce stade, il est possible d'ajouter de l'eau afin de faciliter l'imprégnation, dans le cas où la mélasse n'en contient pas suffisamment. Pour une imprégnation optimale, on peut choisir d'ajuster le taux de matière sèche du pré-mélange entre 30 et 60 %, de préférence entre 40 et 50 % (en masse).

Dans un deuxième temps, on ajoute les micro-organismes vivants, déshydratés et encapsulés au pré-mélange, et on mélange l'ensemble, de sorte à obtenir une composition intermédiaire. Ceci peut être effectué dans le même mélangeur que la fabrication du pré-mélange. La quantité de micro-organismes ajoutés est de préférence comprise entre 10 et 100 mg (en matière sèche) par gramme de pré-mélange, plus particulièrement entre 20 et 60 mg, idéalement entre 30 et 50 mg.

Les deux étapes de mélange peuvent être effectuées à température ambiante.

Dans un troisième temps, la composition intermédiaire est séchée. Il est souhaitable que l'étape de séchage intervienne aussi rapidement que possible après l'ajout des micro-organismes, afin d'éviter toute dégradation ou tout déclenchement d'activité de ceux-ci au contact d'un milieu contenant de l'eau et des sucres. De préférence, la durée séparant l'ajout des micro-organismes du séchage est inférieure à 1h/kg de matière sèche, plus particulièrement inférieure à 30 minutes/kg de matière sèche, idéalement inférieure à 15 minutes /kg de matière sèche.

De préférence, la durée séparant l'ajout des micro-organismes du séchage est inférieure à 1 heure, plus particulièrement inférieure à 30 minutes, idéalement inférieure à 15 minutes, voire à 10 minutes ou 5 minutes.

Le séchage est de préférence effectué par atomisation, c'est-à-dire en injectant la composition intermédiaire sous la forme d'un fin brouillard en haut d'une tour en même temps qu'un courant d'air chaud. Sous l'effet de la chaleur, l'eau s'évapore et charge l'air en eau. On récupère la composition séchée en bas de la tour d'atomisation.

Dans un quatrième temps, et de manière optionnelle, la composition séchée peut être tamisée afin de fournir la composition finale.

La composition obtenue est de préférence sous forme de poudre et peut être conditionnée en sachets, flacons ou autres contenants. Cette composition peut être utilisée en tant qu'additif pour tout produit alimentaire, alicament, complément alimentaire ou diététique, notamment : produit diététique sous forme de barre énergétique, de sachet à diluer ; de poudre, de gélules, de comprimés ; produit déshydraté tel que chicorée, chocolat, café ; plantes deshydratées telles que thé, tisanes ; laitages déshydratés tels que yaourts, poudres et produits à base de soja ; protéines déshydratées ; biscuits ; laitages et produits frais à base de soja ; compotes ; crèmes desserts; crèmes glacées ; produit d'alimentation animale sous toutes ses formes (blocs, granulés, comprimés, poudres...).

La composition selon l'invention peut être commercialisée telle quelle et ajoutée directement par le consommateur à un produit alimentaire. Alternativement, la composition peut être incorporée en tant qu'additif à un produit alimentaire au stade de sa production.

La composition selon l'invention peut également être utilisée pour la fabrication d'un médicament, soit directement sous forme de poudre à disperser dans de l'eau (la composition étant alors en combinaison ou non avec un ou plusieurs additifs et / ou excipients pharmaceutiquement acceptables), soit sous une quelconque forme galénique connue de l'homme du métier :comme par exemple formulations pour les voies d'administration locale telles que pommades, crèmes, capsules ou gélules vaginales, patchs, implants, suppositoires ; de préférence une forme galénique pour voie orale, notamment gélules, capsules, comprimés ou granules, en combinaison avec un ou plusieurs véhicules, additifs et / ou excipients pharmaceutiquement acceptables.

La composition selon l'invention présente des propriétés de stabilité satisfaisantes, voire améliorées par rapport aux propriétés de stabilité des micro-organismes vivants, déshydratés et encapsulés pris isolément, et ce sur une durée d'au moins 1 mois, de préférence d'au moins 6 mois, de manière plus particulièrement préférée d'au moins 1 an, idéalement d'au moins 2 ans voire d'au moins 3 ans. La stabilité est évaluée en mesurant le nombre de micro-organismes viables dans la composition à différentes dates successives après la fabrication.

### Utilisation

La composition elle-même, ainsi que les produits alimentaires / diététiques ou les médicaments qui en sont dérivés, sont indiqués pour un usage animal ou humain.

Les deux composés actifs de la composition, à savoir la mélasse et les micro-organismes, ont des effets qui s'additionnent, voire agissent en synergie, afin de :
- prévenir un état de maladie ; et / ou
- participer à la perte de poids et / ou faciliter la perte de poids et / ou traiter ou prévenir l'obésité et / ou traiter ou soulager les désordres ou maladies liées à ou causées par l'obésité ou le surpoids ; et / ou
- renforcer l'organisme face au stress, à la fatigue, à un état de carence, à des troubles de l'humeur ; et / ou
- contribuer à préserver l'homéostasie comme aider l'organisme à la régulation de la tension artérielle ; et/ou
- faciliter une convalescence ; et / ou
- stimuler les défenses immunitaires ; et / ou
- stimuler les fonctions digestives et améliorer le confort digestif; et/ou
- assurer une meilleure biodisponibilité des nutriments et améliorer l'assimilation de nutriments essentiels ; et / ou
- apporter de l'énergie à absorption lente à l'organisme; et / ou
- protéger contre les infections de la sphère ORL et de la sphère gynécologique (mycoses vaginales...).

Les sujets jeunes, les sujets âgés, les sujets malades, les sujets convalescents, les sujets carencés, les sujets sportifs, constituent des populations pour lesquelles la composition selon l'invention est particulièrement utile.

Par extension, tout sujet voulant prendre soin de sa santé et prévenir un état de maladie trouvera la présente invention opportune pour améliorer et maintenir son état de bien-être physique et mental.

En outre, la teneur en cuivre de la composition, de préférence supérieure à 0,4 % en masse, permet de conférer à la composition un effet anti-anémiant, antioxydant, anti-inflammatoire et anti-infectieux.

La teneur en fer de la composition, de préférence supérieure à 1,4 % en masse, permet de conférer à la composition un effet anti-anémiant.

La teneur en calcium de la composition, de préférence supérieure à 0,3 % en masse, permet de conférer à la composition un effet de maintien de la résistance et de la densité des os, de la conduction nerveuse, de la contraction musculaire, ainsi qu'un effet de régulation de l'activité enzymatique et des membranes cellulaires.

La teneur en potassium de la composition, de préférence supérieure à 4 % en masse, permet de conférer à la composition un effet de régulation de la conduction nerveuse, de l'activité musculaire et de l'équilibre acido-basique, et de prévention ou traitement, de l'athérosclérose, de l'hypertension, des maladies inflammatoires chroniques intestinales.

La teneur en manganèse de la composition, de préférence supérieure à 0,3 % en masse, permet de conférer à la composition un effet d'activation enzymatique de protection des cellules contre les radicaux libres.

La teneur en magnésium de la composition, de préférence supérieure à 0,2 % en masse, permet de réguler l'activité neuronale et musculaire.

La teneur en fructose de la composition, de préférence supérieure à 2,5 % en masse, permet de conférer à la composition un effet hypoglycémique et de stabilisation de la glycémie, d'amélioration de l'endurance.

La présence de choline dans la composition permet d'améliorer les capacités de récupération de l'organisme, prévient la fatigue musculaire, augmente les performances chez le sportif, freine la diminution des performances physiques et cognitives liées à l'âge.

### EXEMPLES

Les exemples suivants illustrent l'invention sans la limiter.

### Exemple 1 - fabrication de la composition

Une composition selon l'invention est préparée à partir des composés suivants :
- mélasse de canne à sucre à l'état brut d'origine Guadeloupe, sucrerie GARDEL, de type alimentaire spécialement prélevée pour la préparation ;
- micro-organismes vivants, déshydratés et encapsulés : bactéries de type *Bifidobacterium longum*, commercialisées par Lallemand (France) sous la référence Probiocap Rosell-175 ME ; la caractérisation microbiologique de ce composé, fournie par la société Lallemand, est la suivante : *Bifidobacterium longum* > 5×10¹⁰ cfu/g ; staphylocoques < 10 cfu/g ; levures et moisissures < 10³ cfu/g ; saprophytes < 10⁴ cfu/g ; *Pseudomonas* < 25 cfu/g ; bacilles < 10⁴ cfu/g ; salmonelles < 1 cfu par 25 g ; coliformes < 1 cfu /g.
- fibres de polyoside : fibres de dextrine de la marque Nutriose® (Roquette, France).

On effectue une caractérisation microbiologique de la mélasse avant son utilisation. A cette fin, la mélasse est diluée dans un bouillon LT100, au 1/10ème, puis ensemencée :
- pour le dénombrement des germes totaux aérobies, sur boîte de Petri dans une gélose trypticase soja (peptone de caséine : 17,0 g/l - peptone de farine de soja : 3,0 g/l - D(+)- glucose : 2,5 g/l - chlorure de sodium : 5,0 g/l - phosphate dipotassique : 2,5 g/l - eau : 1000 ml, pH : 7,3 ± 0,2) ;
- pour le dénombrement des levures et des moisissures, sur un milieu Sabouraud Glucosée Chloramphénicol - gélose (SAB, Biomérieux, France).

Dans les deux cas, les milieux gélosés sont placés dans une étuve pendant 5 jours, à 37°C. Puis, les colonies sont comptées et les résultats sont exprimés en cfu/ml.

Les germes totaux ont une concentration inférieure à 1000 cfu/g et les levures et moisissures, une concentration inférieure à 100 cfu/g.

Préparation du pré-mélange : on mélange 40% de mélasse à 60% de fibres de polyoside dans un triblender inox (F2116MD-MBV-F, Tri-clover USA) préalablement désinfecté. On effectue une dilution à 10 % avec de l'eau. Après homogénéisation, on mesure la teneur en matière sèche du pré-mélange. A cette fin, une fraction du pré-mélange est séchée à l'étuve (Memmert GmbH, Allemagne) à 105°C, pendant 2 heures. Le résidu sec est pesé avec une balance Sartorius 182g à une précision de 10⁻⁴ g. On vérifie que la teneur (massique) en matière sèche du pré-mélange est comprise entre 40% et 50%.

Préparation de la composition intermédiaire : on ajoute 40 mg/g (en matières sèches) de probiotiques au pré-mélange, et on mélange le tout avec le triblender à la vitesse de 100 trs/min, à une température n'excédant pas 25°C.

Obtention de la composition finale : la composition finale est obtenue par atomisation de la composition intermédiaire. La tour de séchage par atomisation comprend un chauffage par résistance électrique, et une pulvérisation avec turbine ou buse bi-fluide. Le temps de séjour dans la chambre est de 15 à 24 s, le débit d'air est d'environ 500 kg/h. La température d'entrée est de 155°C, la température de sortie est de 85°C. La différence de pression du cyclone est de 200 mm Hg.

Traitement final : la composition finale est tamisée sur un tamis vibrant inox (Vibrowest, Italie) de 250 µm, à 1000-1450 trs/min, 0,5-1,85 kW, 30 s/kg. La composition est ensuite immédiatement conditionnée en sachets pour éviter toute prise d'humidité et toute contamination.

La composition finale obtenue se présente sous la forme d'une fine poudre brune présentant l'odeur caractéristique de la mélasse. La perte à la dessiccation est inférieure à 6 %. La solubilité de la poudre obtenue est de 10 %.

Quinze jours après la fabrication de la composition, la quantité de probiotiques de type *Bifidobacterium longum* viables dans la composition est mesurée par la société Lallemand. Sur trois échantillons distincts, la population de *Bifidobacterium longum* est évaluée respectivement à 4, 2×10⁷ cfu/g, 5,3×10⁷ cfu/g et 2,35×10⁷ cfu/g.

### Exemple 2 - effet de la composition sur la viabilité cellulaire

La composition obtenue à l'exemple 1 est évaluée du point de vue de la viabilité des cellules issues d'un adénocarcinome colorectal humain, cultivé en monocouche (lignée Caco-2, clone TC-7), par la méthode de réduction du MTT (bromure de méthylthiazolyldiphényl-tetrazolium). Les cellules sont cultivées en monocouche jusqu'à confluence dans le milieu DMEM/MEM Acane additionné de pénicilline (Sigma, 50 UI/mL), de stroptomycine (Sigma, 50 mg/mL), de gentamycine (Sigma, 10 mg/mL) et de sérum de veau foetal (Sigma, 10%, v/v).

La composition finale est diluée à 1 µg/mL, 10 µg/mL, 100 µg/mL, 1 mg/mL, 10 mg/mL et 100 mg/mL et mise en présence des cellules pendant 48h, à 37°C en atmosphère humide contenant 5 % de CO₂. L'EGF *(Epithelial Growth Factor)* est utilisé comme produit de référence dans le test de la prolifération des cellules TC-7.

La viabilité cellulaire est mesurée selon la méthode de réduction du MTT. La réduction du MTT en bleu de formazan est évaluée par une mesure de la densité optique, proportionnelle au nombre de cellules métaboliquement actives, déterminée par spectrophotométrie à 540 nm.

Les résultats sont exprimés en unités arbitraires de densité optique (D.O) par échantillon et en pourcentage de variation par rapport au groupe témoin. Les tests statistiques sont effectués sur les valeurs de D.O. La différence entre les moyennes des différents groupes 'témoin' *versus* groupe 'traité' est déterminée par analyse de la variance à un facteur (Anova 1, σ <0,05) et la moyenne des groupes traités à celle du groupe témoin est déterminée par le test de Dunnett (σ <0,1).

Les résultats sont représentés dans le tableau 1 ci-dessous.

**Tableau 1 : effet de la composition de l'exemple 2 sur la viabilité des cellules TC-7 après 48 heures d'incubation**

| | Concentration de la composition, en mg/mL | | | | | | |
|---|---|---|---|---|---|---|---|
| | Témoin | 0,001 | 0,01 | 0,1 | 1 | 10 | 100 |
| DO | 1,115 | 1,263 | 1,081 | 1,343 | 1,905 | 1,359 | 0,766 |
| | 1,259 | 1,323 | 1,162 | 1,36 | 1,311 | 1,402 | 0,766 |
| | 1, 81 | 1,259 | 1,243 | 1,323 | 1, 402 | 1,339 | 0,726 |
| Moyenne | 1,185 | 1,282 | 1,162 | 1,342 *** | 1,373 *** | 1,365 *** | 0,753 *** |
| Ecart type | 0,072 | 0,036 | 0,081 | 0,019 | 0,053 | 0,033 | 0,023 |
| Viabilité cellulaire en pourcentage du "témoin" | 100 | 108 | 98 | 113 | 116 | 115 | 64 |

| | | | | | | | |
|---|---|---|---|---|---|---|---|
| *** = moyenne significativement différente de celle du groupe témoin (p<0,01). | | | | | | | |

On constate que la composition finale à des concentrations inférieures ou égales à 10 mg/mL ne modifie pas la viabilité des cellules TC-7, après 48 heures d'incubation et ne présente donc aucun effet cytotoxique.

## Revendications

1. Composition comprenant :
- de la mélasse séchée ; et
- des micro-organismes vivants, déshydratés et encapsulés.

2. Composition selon la revendication 1, comprenant en outre des fibres de polyoside.

3. Composition selon la revendication 2, dans laquelle les fibres de polyoside sont des fibres de dextrine ou de maltodextrine.

4. Composition selon l'une des revendications 1 à 3, comprenant une proportion massique totale d'eau inférieure ou égale à 6 %, de préférence inférieure ou égale à 5 %, de manière plus particulièrement préférée inférieure à 4 %.

5. Composition selon l'une des revendications 1 à 4, comprenant en proportions massiques :
- de 10 à 50 % de mélasse séchée, de préférence de 15 à 45 %, de manière plus particulièrement préférée de 20 à 40 % ;
- de 15 à 70 % de fibres de polyoside, de préférence de 20 à 65 %, de manière plus particulièrement préférée de 35 à 60 % ; et
- de 4 à 50 % de micro-organismes vivants, déshydratés et encapsulés, de préférence de 10 à 40 %, de manière plus particulièrement préférée de 20 à 30 %.

6. Composition selon l'une des revendications 1 à 5, dans laquelle la mélasse est choisie parmi les mélasses de betterave, de canne, de fruits, de céréales et leurs mélanges, et de préférence parmi les mélasses de betterave, de canne et leurs mélanges, et de manière plus particulièrement préférée de canne.

7. Composition selon l'une des revendications 1 à 6, dans laquelle les micro-organismes sont des micro-organismes probiotiques choisis parmi les bactéries ou levures des genres *Bifidobacterium, Lactobacillus, Lactococcus, Streptococcus, Pediococcus, Enterococcus, Propionibacterium, Saccharomyces, Kluyveromyces* et leurs mélanges, et de préférence parmi les espèces *Bifidobacterium longum, Lactobacillus casei, Lactobacillus rhamnosus, Lactobacillus helveticus* et *Saccharomyces torula*.

8. Composition selon l'une des revendications 1 à 7, comprenant une quantité de micro-organismes vivants d'au moins 10⁵, de préférence au moins 10⁷, idéalement au moins 5x10⁷ cfu/g.

9. Produit alimentaire ou diététique comprenant la composition selon l'une des revendications 1 à 8.

10. Médicament comprenant la composition selon l'une des revendications 1 à 8 sous forme de comprimés, gélules, poudre ou granules.

11. Procédé de fabrication d'une composition, comprenant le mélange de mélasse avec des micro-organismes vivants, déshydratés et encapsulés, ainsi qu'une étape de séchage.

12. Procédé selon la revendication 11, comprenant successivement:
- le mélange de la mélasse, de fibres de polyoside, et éventuellement d'eau de sorte à obtenir un pré-mélange ;
- l'ajout des micro-organismes vivants, déshydratés et encapsulés au pré-mélange de sorte à obtenir une composition intermédiaire ; et
- le séchage de la composition intermédiaire.

13. Procédé selon la revendication 12, dans lequel le séchage de la composition intermédiaire est effectué par atomisation.

14. Procédé selon la revendication 12 ou 13, dans lequel le taux de matière sèche du pré-mélange est compris entre 30 et 60 %, de préférence entre 40 et 50 % en masse.

15. Procédé selon l'une des revendications 11 à 14, dans lequel la composition est selon l'une des revendications 1 à 8.

## Claims

1. A composition comprising:
- dried molasses;
- live, dehydrated and encapsulated micro-organisms.

2. The composition according to claim 1, further comprising polyoside fibers.

3. The composition according to claim 2, wherein the polyoside fibers are dextrin or maltodextrin fibers.

4. The composition according to any of claims 1 to 3, comprising a total mass proportion of water of less than or equal to 6%, preferably less than or equal to 5%, most preferably less than 4%.

5. The composition according to any of claims 1 to 4, comprising in mass proportions:
- from 10 to 50% of dried molasses, preferably from 15 to 45%, most preferably from 20 to 40%;
- from 15 to 70% of polyoside fibers, preferably from 20 to 65%, most preferably from 35 to 60%; and
- from 4 to 50% of live, dehydrated and encapsulated micro-organisms, preferably from 10 to 40%, most preferably from 20 to 30%.

6. The composition according to any of claims 1 to 5, wherein the molasses are selected from beet, cane, fruit, cereal molasses and mixtures thereof, and preferably from beet, cane molasses and mixtures thereof, and most preferably from cane molasses.

7. The composition according to any of claims 1 to 6, wherein the micro-organisms are probiotic micro-organisms selected from bacteria or yeasts of the genera *Bifidobacterium, Lactobacillus, Lactococcus, Streptococcus, Pediococcus, Enterococcus, Propionibacterium, Saccharomyces, Kluyveromyces* and mixtures thereof, and preferably of the species *Bifidobacterium longum, Lactobacillus casei, Lactobacillus rhamnosus, Lactobacillus helveticus* and *Saccharomyces torula.*

8. The composition according to any of claims 1 to 7, comprising an amount of live micro-organisms of at least 10⁵, preferably at least 10⁷, ideally at least 5x10⁷ cfu/g.

9. A food or diet product comprising the composition according to any of claims 1 to 8.

10. A drug comprising the composition according to any of claims 1 to 8, in the form of tablets, gelatin capsules, powder or granules.

11. A method for making a composition, comprising the mixing of molasses with live, dehydrated and encapsulated micro-organisms, as well as a drying step.

12. The method according to claim 11, successively comprising:
- the mixing of molasses, polyoside fibers, and optionally water so as to obtain a premix;
- the adding of the live, dehydrated and encapsulated micro-organisms so as to obtain an intermediate composition; and
- the drying of the intermediate composition.

13. The method according to claim 12, wherein the drying of the intermediate composition is carried out by atomization.

14. The method according to claim 12 or 13, wherein the dry material level of the premix is comprised between 30 and 60%, preferably between 40 and 50% by mass.

15. The method according to any claims 11 to 14, wherein the composition is according to any of claims 1 to 8.

## Patentansprüche

1. Zusammensetzung, die Folgendes umfasst:
- getrocknete Melasse und
- lebende, dehydratisierte und eingekapselte Mikroorganismen.

2. Zusammensetzung nach Anspruch 1, die außerdem Polysaccharidfasern umfasst.

3. Zusammensetzung nach Anspruch 2, wobei es sich bei den Polysaccharidfasern um Dextrin- oder Maltodextrinfasern handelt.

4. Zusammensetzung nach einem der Ansprüche 1 bis 3, die einen Gesamtgewichtsanteil von Wasser kleiner als oder gleich 6 %, vorzugsweise kleiner als oder gleich 5 %, besonders bevorzugt kleiner als 4 % ist.

5. Zusammensetzung nach einem der Ansprüche 1 bis 4, das in Gewichtsanteilen Folgendes umfasst:
- 10 bis 50 % getrocknete Melasse, vorzugsweise 15 bis 45 %, besonders bevorzugt 20 bis 40 %;
- 15 bis 70 % Polysaccharidfasern, vorzugsweise 20 bis 65 %, besonders bevorzugt 35 bis 60 %; und
- 4 bis 50 % lebende, dehydratisierte und eingekapselte Mikroorganismen, vorzugsweise 10 bis 40 %, besonders bevorzugt 20 bis 30 %.

6. Zusammensetzung nach einem der Ansprüche 1 bis 5, wobei die Melasse aus Rübenmelassen, Zuckerrohrmelassen, Fruchtmelassen, Kornmelassen und deren Mischungen und vorzugsweise Rübenmelassen, Zuckerrohrmelassen und deren Mischungen und besonders bevorzugt Zuckerrohrmelassen ausgewählt ist.

7. Zusammensetzung nach einem der Ansprüche 1 bis 6, wobei es sich bei den Mikroorganismen um probiotische Mikroorganismen handelt, die aus Bakterien oder Hefen der Gattungen *Bifidobacterium, Lactobacillus, Lactococcus, Streptococcus, Pediococcus, Enterococcus, Propionibacterium, Saccharomyces, Kluyveromyces* und deren Mischungen und vorzugsweise aus den Spezies *Bifidobacterium longum, Lactobacillus casei, Lactobacillus rhamnosus, Lactobacillus helveticus* und *Saccharomyces torula* ausgewählt sind.

8. Zusammensetzung nach einem der Ansprüche 1 bis 7, die eine Menge lebender Mikroorganismen von mindestens 10⁵, vorzugsweise mindestens 10⁷, im Idealfall mindestens 5 x 10⁷ KBE/g umfasst.

9. Nahrungsmittel- oder diätetisches Produkt, das die Zusammensetzung nach einem der Ansprüche 1 bis 8 umfasst.

10. Arzneimittel, das die Zusammensetzung nach einem der Ansprüche 1 bis 8 umfasst, in Tabletten-, Kapsel-, Pulver- oder Granulatform.

11. Verfahren zur Herstellung einer Zusammensetzung, das das Mischen von Melasse mit lebenden, dehydratisierten und eingekapselten Mikroorganismen sowie einen Trocknungsschritt umfasst.

12. Verfahren nach Anspruch 11, das nacheinander Folgendes umfasst:
- Mischung der Melasse, Polysaccharidfasern und gegebenenfalls Wasser, um eine Vormischung zu erhalten;
- Zugabe von lebenden, dehydratisierten und eingekapselten Mikroorganismen zu der Vormischung, um eine Zwischenzusammensetzung zu erhalten; und
- Trocknung der Zwischenzusammensetzung.

13. Verfahren nach Anspruch 12, wobei die Trocknung der Zwischenzusammensetzung mittels Zerstäubung durchgeführt wird.

14. Verfahren nach Anspruch 12 oder 13, wobei der Gehalt an getrocknetem Material der Vormischung zwischen 30 und 60 Gew.-%, vorzugsweise zwischen 40 und 50 Gew.-% liegt.

15. Verfahren nach einem der Ansprüche 11 bis 14, wobei die Zusammensetzung nach einem der Ansprüche 1 bis 8 ist.
